# EUROPEAN PATENT APPLICATION

(11) **EP 4 470 835 A1**
(43) Date of publication of application: **04.12.2024**
(21) Application number: 23176879.7
(22) Date of filing: 01.06.2023
(51) Int. Cl.: B60Q 1/00, E05B 81/76

(54) **AUTOMOTIVE LUMINOUS DEVICE INCLUDING A SENSOR TO OPEN A VEHICLE ELEMENT**

(71) Applicant: Valeo Vision, 93012 Bobigny Cedex (FR)
(72) Inventor: CANTUDO, Miguel-Angel, 23600 Martos (ES); ILLAN, Antonio, 23600 Martos (ES); FERNANDEZ, Ricardo, 23600 Martos (ES); CAZALLA, Jesus-David, 23600 Martos (ES)
(74) Representative: Valeo Visibility

(57) **Abstract**

The invention provides an automotive luminous device (10) comprising a housing (3), a first electronic substrate (1) located inside the housing, a light source (2) installed in the first electronic substrate (1), a driver (4) installed in the first electronic substrate (1) and an electric connector (5) accessible from the exterior of the housing (3). The electric connector (5) is configured to receive a main supply and is electrically connected to the first electronic substrate (1) by means of electric wires. The device (10) further comprises a second electronic substrate (6) arranged inside the housing (3), a mechanical sensor (7) located in the second electronic substrate (6), a sensor hole (8) located in the housing (3), a protection element (9) covering the sensor hole (8), configured to be deformed until making contact with the sensor and a control element (11) located in the first electronic substrate (1) and configured to receive the sensor signal, wherein the control element (11) is configured to send information comprising instructions for opening an element of an automotive vehicle.

## Description

### TECHNICAL FIELD

This invention belongs to the field of the arrangements of the elements of an automotive luminous device and the use of sensors to open vehicle elements, such as doors or the boot lid.

### STATE OF THE ART

Automotive lighting market can be considered one of the most competitive ones and new functions are constantly required.

In some cases, lighting devices, due to the closeness to some elements of the vehicle, can take part in actions which are not properly luminous. However, further electronics must be supplied to perform these functions.

The present invention provides a way of using a luminous device for unlocking an element of the vehicle, such as a door or the boot lid, without further electronic circuits and keeping the watertightness of the same.

### DESCRIPTION OF THE INVENTION

The present invention provides a solution for these problems by means of an automotive luminous device comprising:
a housing;
a first electronic substrate located inside the housing;
at least a light source installed in the first electronic substrate;
a driver installed in the first electronic substrate and configured to control the operation of the at least one light source;
an electric connector accessible from the exterior of the housing, the electric connector being configured to receive a main supply and being electrically connected to the first electronic substrate by means of electric wires;
a second electronic substrate arranged inside the housing;
a mechanical sensor located in the second electronic substrate, the mechanical sensor being configured to emit a sensor signal when being contacted;
a sensor hole located in the housing;
a protection element covering the sensor hole, configured to be deformed until making contact with the sensor;
a control element located in the first electronic substrate and configured to receive the sensor signal, wherein the control element is configured to send information comprising instructions for opening an element of an automotive vehicle.

With this device, the protection element can be activated by the user in a zone of the luminous device, without the need of a further electric circuit that connects a different zone of the vehicle (near the element to be locked or unlocked) to the body control module. Also, watertightness of the luminous device is not compromised, since the protection element can activate the sensor without the user interfering the interior of the luminous device.

In some particular embodiments, the substrate may comprise printed circuits to connect electrically to the electronic component(s), the substrate being otherwise called printed circuit board (PCB).

In some particular embodiments, the electronic substrate is a rigid electronic substrate.

A rigid substrate should be understood in the sense of what the skilled person would construe. A skilled person knows the difference between a rigid substrate and a flexible substrate. Although every material is "flexible" in the sense that it has a stress-strain curve, a substrate which does not deform by its own weight when held by one of its ends is deemed to be rigid, while a substrate which suffer a substantial deformation when held by one of its ends is considered to be flexible. In any case, board manufacturers offer a "flexible" model and a "rigid" model, while any skilled person knows the difference between them.

In some particular embodiments, the protection element is an element manufactured by an injection moulding process, the protection element comprising an elastomeric element and a plastic or metallic substrate.

In some particular embodiments, the control element is configured to detect a password defined by a combination of features.

With this invention, the mechanical sensor is connected to the control element, so that the control element is able to disregard a multitude of different patterns or passwords to unlock the automotive element.

In some particular embodiments, the features comprise a number of pulsations and a duration of each pulsation, wherein a pulsation is defined as a contact of the protection element against the sensor.

This is a simple way of establishing a personal password for each user. This specific embodiment allows the password to be set and reset by independent electronic means (e.g., via OTA) and adjust the sensitivity of the system to recognize the password.

In some particular embodiments, the mechanical sensor is connected to the control element as a switch, so that a pulsation of the user on the mechanical sensor closes an electric line from the control element to ground.

This is a simple way of implementing a mechanical sensor which is able to send password patterns to the control element.

In some particular embodiments, the protection element is connected to the housing in a watertight manner by means of ultrasound welding, laser welding, gluing, or thermal electrode welding.

Watertightness is often important in automotive luminous devices, and the discontinuity created for the user to access the sensor is solved by a watertight seal of the protection element.

In some particular embodiments, the protection element is manufactured in the same process as the housing, by injecting the first component in a frame portion of the sensor hole and then injecting a second component more flexible than the first component to cover the rest of the sensor hole.

The injection manufacturing process of the housing is performed with an element which prevents the sensor hole from being filled. Then, a first component of the protection element is injected (the hardest one) to cover the frame of the sensor hole. Then, a second component of the protection element is injected (the elastic one) to cover the rest of the hole, making the user able to deform the protection element to reach the mechanical sensor.

In some particular embodiments, the first electronic substrate and the second electronic substrate are electrically connected.

The connection between the first and second electronic substrates is an advantageous way for the control element to be configured to receive the sensor signal.

In some particular embodiments, the light source is a solid-state light source.

The term "solid state" refers to light emitted by solid-state electroluminescence, which uses semiconductors to convert electricity into light. Compared to incandescent lighting, solid state lighting creates visible light with reduced heat generation and less energy dissipation. The typically small mass of a solid-state electronic lighting device provides for greater resistance to shock and vibration compared to brittle glass tubes/bulbs and long, thin filament wires. They also eliminate filament evaporation, potentially increasing the lifespan of the illumination device. Some examples of these types of lighting comprise semiconductor light-emitting diodes (LEDs), organic light-emitting diodes (OLED), or polymer light-emitting diodes (PLED) as sources of illumination rather than electrical filaments, plasma or gas.

These light sources are specifically advantageous, since they provide the required luminous properties for the automotive regulations with a high efficiency and reliability.

In some particular embodiments, the control element is configured to send the information to the electric connector by means of a CAN connection, a LIN connection or by sending an analogue signal.

A LIN connection is a widespread standard in automotive connections, so the data obtained by the control element may be communicated to the body control module by means of an existing connection, which is already used by the current functions of the luminous device.

In some particular embodiments, the control element comprises a microprocessor or an electronic element configured to detect a change in the sensor signal.

It would be possible to provide the control functionality only by hardware, but it would be difficult and less customizable, so it is better to provide a microprocessor.

In some particular embodiments, the control element is integrated in the driver.

Sometimes the control element may be integrated in the driver, if this one is complex enough to accept a new data input (coming from the sensor) and a new data output (informing the body control module to lock or unlock the element).

In some particular embodiments, the luminous device further comprises an optic element configured to project light received from the light source.

An optical element is an element that has some optical properties to receive a light beam and emit it in a certain direction and/or shape, as a person skilled in automotive lighting would construe without any additional burden. Reflectors, collimators, light guides, projection lenses, etc., or the combination thereof are some examples of these optical elements which are useful for transforming the light beams emitted by the light source into an acceptable light pattern for the functionality chosen for the lighting device.

In a further inventive aspect, the invention provides an automotive vehicle comprising
an automotive luminous device according to the first inventive aspect;
a car element configured to receive information from a control element to be locked or unlocked.

In some particular embodiments, the car element is a door or a boot lid.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 discloses a first perspective view of an automotive vehicle according to the invention, comprising a rear lamp and a boot lid.
Figure 2 shows a scheme of a luminous device according to the invention, which in this case is a rear lamp.
Figure 3 shows a simple electric scheme of the activation circuit in a luminous device according to the invention.

In this document, the following reference numbers have been used:
- 1: First printed circuit board
- 2: LED
- 3: Housing
- 4: Driver
- 5: Electric connector
- 6: Second printed circuit board
- 7: Mechanical sensor
- 8: Sensor hole
- 9: Protection element
- 10: Rear lamp
- 11: Control element
- 12: Outer transparent element
- 100: Automotive vehicle
- 101: Boot lid
- 102: Body control module

### DETAILED DESCRIPTION OF THE INVENTION

The example embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiment can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

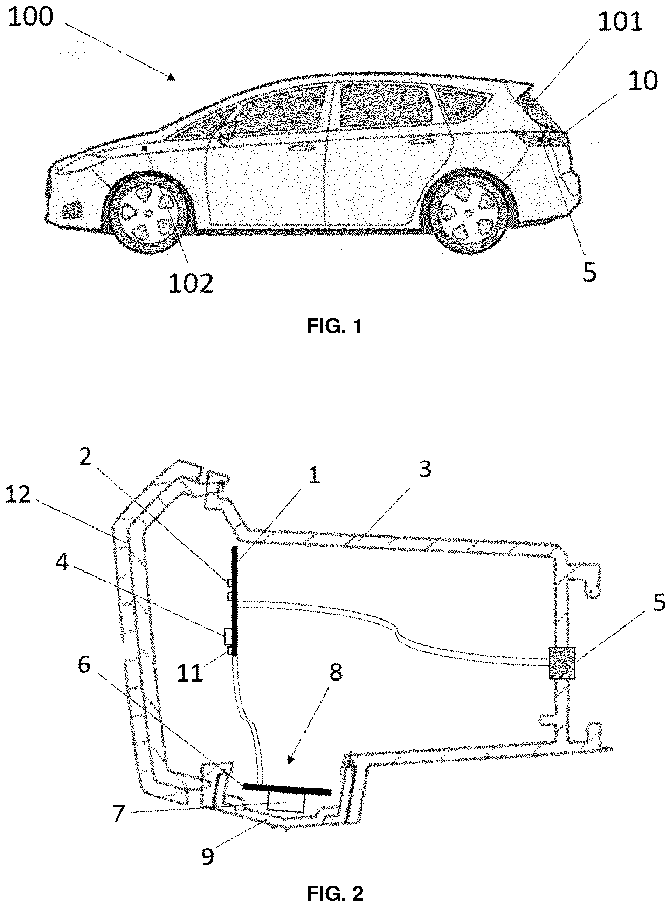

Figure 1 discloses a first perspective view of an automotive vehicle 100 according to the invention. This vehicle 100 comprises a boot lid 101 which is configured to be unlocked when receiving an unlocking signal from the body control module 102.

The body control module 102 receives signals from the rear lamp 10 via its electric connector 5. The electric connector 5 provides electric supply and data to the electronic substrates comprised in the interior of the rear lamp 10 and also communicates information via a LIN protocol to the body control module 102. Part of this information is related to the unlocking of the boot lid 101. This information related to the boot lid comes from a control element which is located in the rear lamp 10, as will be seen in the following figures.

Figure 2 shows a scheme of a luminous device according to the invention, which in this case is a rear lamp 10. In this scheme, there is a housing 3 which encloses the elements of the luminous device. This housing 3 is a plastic element manufactured by injection and is configured to cooperate with an outer transparent element 12 to create a watertight compartment for the elements of the invention.

Inside this housing 3 there is a first electronic substrate, which can be, for example, a first printed circuit board 1. This printed circuit board 1 has some elements installed on it. First of all, there are a group of solid-state light sources, such as LEDs 2, which are configured to emit light which will be used for some signalling functionality.

These LEDs 2 are commanded by a driver 4, which is also installed in the first printed circuit board 1. The driver receives instructions from the body control module of the vehicle via an electric connector 5, which is located in the walls of the housing 3. This electric connector is therefore accessible from the exterior of the housing 3, and is configured to receive a main supply and is electrically connected to the first printed circuit board 1 by means of electric wires.

The housing 3 comprises a sensor hole 8. This sensor hole 8 is located in the wall of the housing 3 and allows an access to the interior of the housing, and more particularly, to a mechanical sensor 7 which is located in a second printed circuit board 6 inside the housing.

This sensor hole 8 is covered by a protection element 9 which guarantees the watertightness of the housing 3. Otherwise, the sensor hole would be a problem, since water or dirt could enter the interior of the housing, causing harm to the electronic elements comprised therein.

The protection element 9 is an elastomeric element, in such a way that it can be deformed by a user from the exterior of the rear lamp 10 until making contact with the mechanical sensor 7, which is located inside of the housing space.

This protection element 9 is injected by means of a bi-component plastic injection: a first component is a rigid component, such as a hard plastic which is arranged in the frame of the sensor hole 8, and a second component is a softer one, such as an elastomeric component, which is arranged in the centre of the sensor hole, so that the user may press the second component and deform the protection element until reaching the mechanical sensor 7.

When the user performs this action, the mechanical sensor 7 acts as a switch, closing a circuit so that the control element 11 receives a sensor signal. The first printed circuit board 1 and the second printed circuit 6 are electrically connected, and due to this electrical connection, the control element 11 is configured to receive the sensor signal. With this information, the control element 11 is able to identify an unlocking pattern (which, for example may comprise three pulsations within a time range of one second, or two short pulsations followed by one long pulsation) and then send information comprising instructions for opening the boot lid.

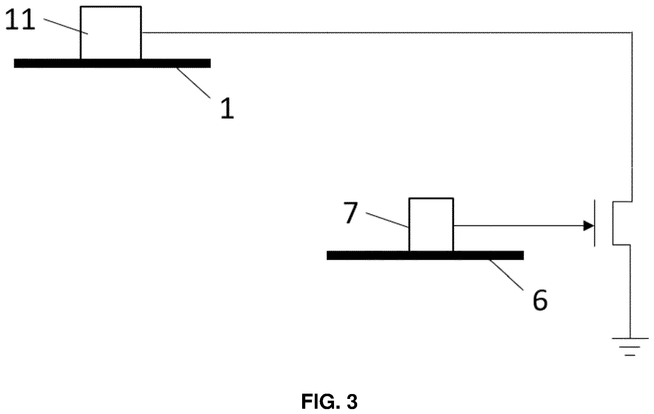

Figure 3 shows a simple electric scheme of the activation circuit.

In this figure, the first printed circuit board 1 comprises (among other elements) the control element 11, which is configured to receive the sensor signal from the mechanical sensor 7, which is installed in a second printed circuit board 6. This second printed circuit board 6 comprises a simple circuit so that, when the mechanical sensor 7 is touched, it closes an electric line connected between the control element 11 and ground. This makes the control element receive a sensor signal which is different from the situation when this circuit is open (which happens when the mechanical sensor 7 is not touched).

In some cases, although irrelevant for this simple scheme, the control element 11 is just an entry of the driver 4 which commands the operation of the LEDs. In other cases, it is a microprocessor or a simple electronic element which is configured to detect a change in the sensor signal.

Either it is part of the driver or not, the control element 11 is configured to send the information to the electric connector by means of a CAN connection, a LIN connection or by sending an analogue signal. This information is transmitted to the body control module to unlock the corresponding element, e.g., the boot lid.

## Claims

1. Automotive luminous device (10) comprising
a housing (3);
a first electronic substrate (1) located inside the housing (3);
at least a light source (2) installed in the first electronic substrate (1);
a driver (4) installed in the first electronic substrate (1) and configured to control the operation of the at least one light source (2);
an electric connector (5) accessible from the exterior of the housing (3), the electric connector (5) being configured to receive a main supply and being electrically connected to the first electronic substrate (1) by means of electric wires;
a second electronic substrate (6) arranged inside the housing (3);
a mechanical sensor (7) located in the second electronic substrate (6), the mechanical sensor (7) being configured to emit a sensor signal when being contacted;
a sensor hole (8) located in the housing (3);
a protection element (9) covering the sensor hole (8), configured to be deformed until making contact with the sensor;
a control element (11) located in the first electronic substrate (1) and configured to receive the sensor signal, wherein the control element (11) is configured to send information comprising instructions for opening an element of an automotive vehicle.

2. Automotive luminous device (10) according to claim 1, wherein the protection element (9) is an element manufactured by an injection moulding process, the protection element comprising an elastomeric element and a plastic or metallic substrate.

3. Automotive luminous device (10) according to any of the preceding claims, wherein the control element (11) is configured to detect a password defined by a combination of features.

4. Automotive luminous device (10) according to claim 3, wherein the features comprise a number of pulsations and a duration of each pulsation, wherein a pulsation is defined as a contact of the protection element against the sensor.

5. Automotive luminous device (10) according to claim 4, wherein the mechanical sensor (7) is connected to the control element (11) as a switch, so that a pulsation of the user on the mechanical sensor (7) closes an electric line from the control element (11) to ground.

6. Automotive luminous device (10) according to any of the preceding claims, wherein the protection element (9) is connected to the housing (3) in a watertight manner by means of ultrasound welding, laser welding, gluing, or thermal electrode welding.

7. Automotive luminous device (10) according to any of claims 1 to 5, wherein the protection element (9) is manufactured in the same process as the housing, by injecting the first component in a frame portion of the sensor hole and then injecting a second component more flexible than the first component to cover the rest of the sensor hole.

8. Automotive luminous device (10) according to any of the preceding claims, wherein the first electronic substrate (1) and the second electronic substrate (6) are electrically connected.

9. Automotive luminous device (10) according to any of the preceding claims, wherein the light source (2) is a solid-state light source.

10. Automotive luminous device (10) according to any of the preceding claims, wherein the control element (11) is configured to send the information to the electric connector (5) by means of a CAN connection, a LIN connection or by sending an analogue signal.

11. Automotive luminous device (10) according to any of the preceding claims, wherein the control element (11) comprises a microprocessor or an electronic element configured to detect a change in the sensor signal.

12. Automotive luminous device (10) according to any of the preceding claims, wherein the control element (11) is integrated in the driver (4).

13. Automotive vehicle (100) comprising
an automotive luminous device (10) according to any of the preceding claims;
a car element (101) configured to receive information from a control element to be locked or unlocked.

14. Automotive vehicle (100) according to claim 13, wherein the car element is a door or a boot lid (101).
